# EUROPEAN PATENT APPLICATION

(11) **EP 4 417 059 A1**
(43) Date of publication of application: **21.08.2024**
(21) Application number: 22880920.8
(22) Date of filing: 06.10.2022
(51) Int. Cl.: A22C 21/00, G06T 7/11

(54) **IMAGE PROCESSING DEVICE, IMAGE PROCESSING PROGRAM, AND IMAGE PROCESSING METHOD**

(30) Priority: 13.10.2021 JP 2021168154
(71) Applicant: MAYEKAWA MFG. CO., LTD., Tokyo 135-8482 (JP)
(72) Inventor: IMAMURA, Hikaru, Tokyo 135-8482 (JP); TOKUMOTO, Masaru, Tokyo 135-8482 (JP); TANAKA, Motomasa, Tokyo 135-8482 (JP)
(74) Representative: Stöckeler, Ferdinand
(86) International application number: PCT/JP2022/037496
(87) International publication number: WO 2023/063225

(57) **Abstract**

An image processing device includes: an image acquiring unit configured to acquire an image in which a subject including an element to be cut off is pictured; a boundary identifying unit configured to identify a boundary between the element and a part other than the element on the image by performing image processing on the image; and a trajectory determining unit configured to determine a trajectory of a cutting edge when the element is cut off from the subject on the basis of the boundary.

## Description

### [Technical Field]

The present invention relates to an image processing device, an image processing program, and an image processing method.

Priority is claimed on Japanese Patent Application No. 2021-168154, filed October 13, 2021, the content of which is incorporated herein by reference.

### [Background Art]

Food which is handled in factories or the like may include extra elements. For example, when foodstuffs are chicken thighs, skin, fat, tendons, and the like are extra elements. All processes of work for removing skin, fat, tendons, and the like from chicken thighs and shaping the chicken thighs are manually performed. Since edged tools need to be used for this work, this work is dangerous. Since this work needs to be performed at low temperature, burdens imposed on workers are large. A problem with a labor shortage becomes tangible. As a device developed to solve such problems, for example, a device disclosed in Non-Patent Document 1 is known. This device cuts foodstuffs using a water-jet.

### [Citation List]

### [Patent Document]

### [Non-Patent Document 1]

"You Tube (registered trademark) JBT - Protein - Europe, Middle East and Africa DSI 800s-PL," [accessed June 24, 2020], Internet <URL: https://www.youtube.com/watch?v=kGfcRU7QpQw>

### [Summary of Invention]

### [Technical Problem]

However, the aforementioned device may not be able to appropriately perform work for cutting off elements to be cut off from foodstuffs having unevenness in shape, color, or the like such as chicken thighs.

An aspect of the present invention provides an image processing device, an image processing program, and an image processing method that can appropriately support work of cutting off an element to be cut off from foodstuffs having unevenness.

### [Solution to Problem]

According to an aspect of the present invention, there is provided an image processing device including: an image acquiring unit configured to acquire an image in which a subject including an element to be cut off is pictured; a boundary identifying unit configured to identify a boundary between the element and a part other than the element on the image by performing image processing on the image; and a trajectory determining unit configured to determine a trajectory of a cutting edge when the element is cut off from the subject on the basis of the boundary.

The image processing device according to the aspect of the present invention may further include a position identifying unit configured to superimpose a predetermined figure on the image and to identify a position of the element in the subject using the predetermined figure.

In the image processing device according to the aspect of the present invention, the image acquiring unit may acquire the image in which the subject including at least two of the elements are pictured, and the position identifying unit may identify positions of the elements in the subject using a relative positional relationship between the at least two elements.

In the image processing device according to the aspect of the present invention, the trajectory determining unit may set the trajectory to be separated by a predetermined distance from the boundary.

According to another aspect of the present invention, there is provided an image processing program causing a computer to perform: an image acquiring function of acquiring an image in which a subject including an element to be cut off is pictured; a boundary identifying function of identifying a boundary between the element and a part other than the element on the image by performing image processing on the image; and a trajectory determining function of determining a trajectory of a cutting edge when the element is cut off from the subject on the basis of the boundary.

According to another aspect of the present invention, there is provided an image processing method including: acquiring an image in which a subject including an element to be cut off is pictured by using an image acquiring unit or an image acquiring function; identifying a boundary between the element and a part other than the element on the image by performing image processing on the image by using a boundary identifying unit or a boundary identifying function; and determining a trajectory of a cutting edge when the element is cut off from the subject on the basis of the boundary by using a trajectory determining unit or a trajectory determining function.

### [Advantageous Effects of Invention]

According to the aspects of the present invention, it is possible to appropriately support work of cutting off an element to be cut off from foodstuffs having unevenness.

### [Brief Description of Drawings]

FIG. 1 is a diagram illustrating an example of a hardware configuration of an image processing device according to an embodiment.
FIG. 2 is a diagram illustrating an example of the image processing device according to the embodiment, an imaging device, a light, and a food processing line.
FIG. 3 is a diagram illustrating an example of a chicken thigh illustrated in FIG. 2 and peripheries thereof when seen from above.
FIG. 4 is a diagram illustrating an example of a software configuration of the image processing device according to the embodiment.
FIG. 5 is a diagram illustrating an example of a boundary between a first skin, a second skin, a third skin, or a tendon and lean meat which is identified by the image processing device according to the embodiment.
FIG. 6 is a diagram illustrating an example of a first skin of a chicken thigh identified by the image processing device according to the embodiment.
FIG. 7 is a diagram illustrating an example of 12 rectangles which are superimposed on an image in which a chicken thigh is pictured according to the embodiment.
FIG. 8 is a diagram illustrating an example of a boundary between a first skin and lean meat, a boundary between a second skin and lean meat, and a boundary between a tendon and lean meat which are identified by the image processing device according to the embodiment.
FIG. 9 is a diagram illustrating an example of a trajectory of a cutting edge when the first skin is cut off from the chicken thigh, a trajectory of a cutting edge when the second skin is cut off from the chicken thigh, and a trajectory of a cutting edge when the tendon is cut off from the chicken thigh which are determined by the image processing device according to the embodiment.
FIG. 10 is a flowchart illustrating an example of a process flow which is performed by the image processing device according to the embodiment.

### [Description of Embodiments]

### [Embodiment]

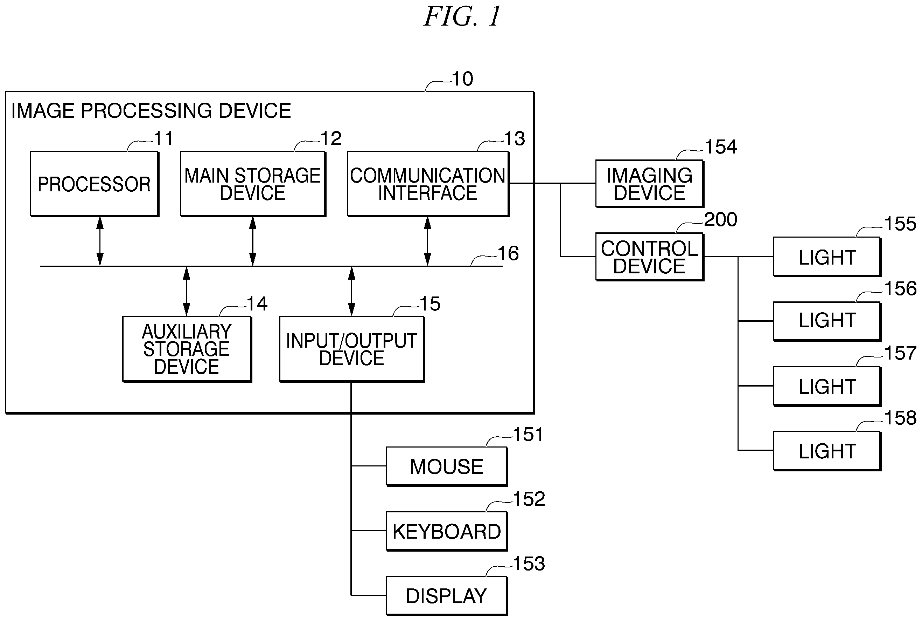

An image processing device, an image processing program, and an image processing method according to an embodiment will be described below with reference to FIGS. 1 to 10. First, hardware constituting the image processing device according to the embodiment and hardware accessory to the image processing device will be first described with reference to FIGS. 1 to 3.

FIG. 1 is a diagram illustrating an example of a hardware configuration of the image processing device according to the embodiment. As illustrated in FIG. 1, the image processing device 10 includes a processor 11, a main storage device 12, a communication interface 13, an auxiliary storage device 14, an input/output device 15, and a bus 16.

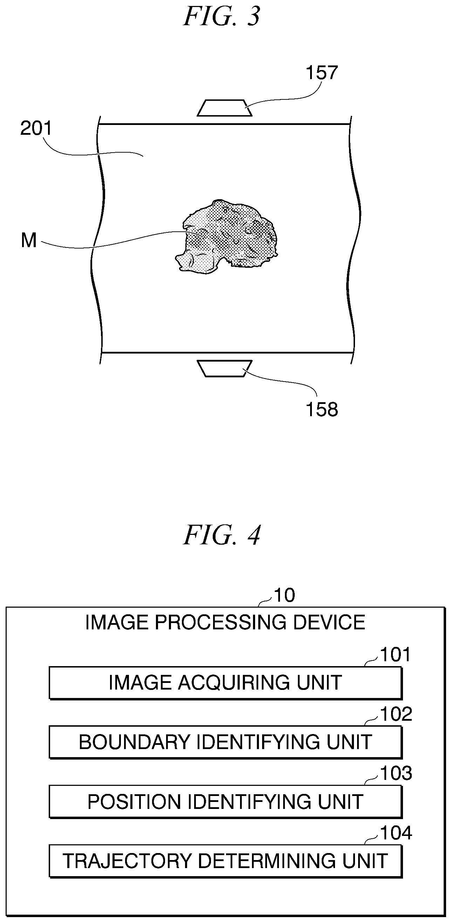

The processor 11 is, for example, a central processing unit (CPU) and realizes functions illustrated in FIG. 4 by reading and executing an image processing program. The processor 11 may realize functions required for realizing each of the functions of the image processing device 10 by reading and executing a program other than the image processing program.

The main storage device 12 is, for example, a random access memory (RAM) and stores the image processing program and other programs which are read and executed by the processor 11.

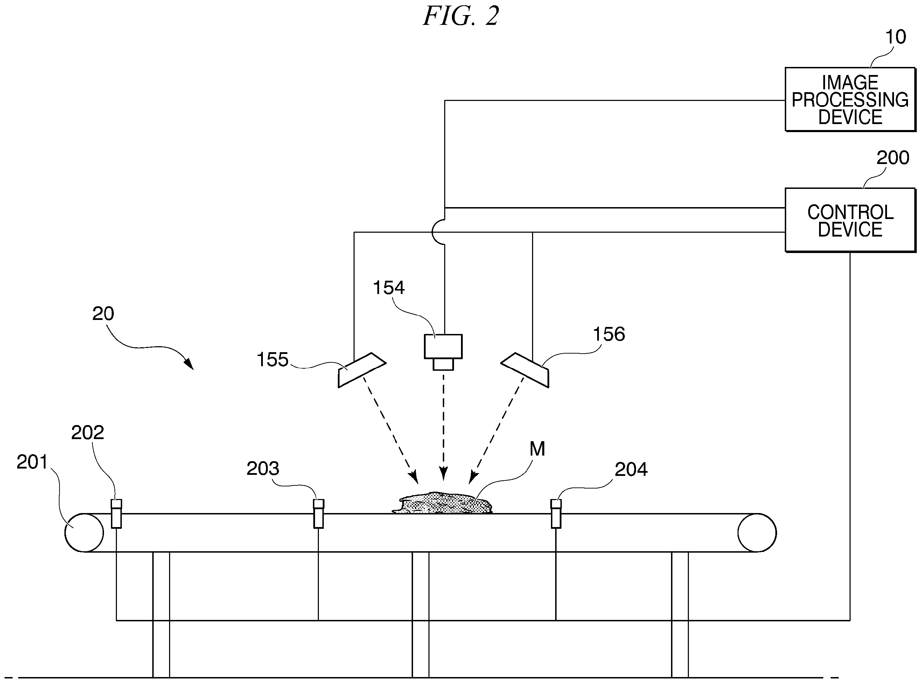

The communication interface 13 is an interface circuit configured to perform communication with an imaging device 154, a control device 200, and other devices via a network. The communication interface 13 is connected to, for example, the imaging device 154 and the control device 200 illustrated in FIGS. 1 and 2. The network mentioned herein is, for example, a wide area network (WAN), a local area network (LAN), the Internet, or an intranet.

The auxiliary storage device 14 is, for example, a hard disk drive (HDD), a solid-state drive (SSD), a flash memory, or a read only memory (ROM).

The input/output device 15 is, for example, an input/output port. The input/output device 15 is connected to, for example, a mouse 151, a keyboard 152, and a display 153 illustrated in FIG. 1. FIG. 2 is a diagram illustrating an example of the image processing device according to the embodiment, an imaging device, lights, and a food processing line. FIG. 3 is a diagram illustrating an example of a chicken thigh illustrated in FIG. 2 and peripheries thereof when seen from above. The control device 200 is connected to a light 155, a light 156, a light 157, and a light 158 and controls the four lights.

The mouse 151 and the keyboard 152 are used for, for example, work of inputting data required to operate the image processing device 10.

The display 153 is, for example, a liquid crystal display. The display 153 displays, for example, a graphical user interface (GUI) of the image processing device 10.

The imaging device 154 is a camera that images a subject in colors. The subject is, for example, a chicken thigh M illustrated in FIG. 2. The chicken thigh M is carried by a belt conveyor 201 constituting the food processing line 20 and is sequentially sensed by a photoelectric sensor 202, a photoelectric sensor 203, and a photoelectric sensor 204. The belt conveyor 201, the photoelectric sensor 202, the photoelectric sensor 203, and the photoelectric sensor 204 are controlled by the control device 200. The imaging device 154 is installed, for example, at a position at which the chicken thigh M can be imaged from above when the chicken thigh M is carried between the photoelectric sensor 203 and the photoelectric sensor 204 by the belt conveyor 201 as illustrated in FIG. 2.

The light 155, the light 156, the light 157, and the light 158 are devices that irradiate a subject with light such as white light and include, for example, a light emitting diode (LED). The light 155 is installed above the belt conveyor 201 as illustrated in FIG. 2 and irradiates the chicken thigh M with light from an upstream side of the belt conveyor 201 with respect to the imaging device 154. The light 156 is installed above the belt conveyor 201 as illustrated in FIG. 2 and irradiates the chicken thigh M with light from a downstream side of the belt conveyor 201 with respect to the imaging device 154. The light 157 and the light 158 are installed aside a trajectory along which the chicken thigh M is carried by the belt conveyor 201 as illustrated in FIG. 3 and irradiate the chicken thigh M carried to a position at which the chicken thigh can be imaged by the imaging device 154 by the belt conveyor 201 with light from both sides.

The bus 16 connects the processor 11, the main storage device 12, the communication interface 13, the auxiliary storage device 14, and the input/output device 15 such that data can be transmitted and received therebetween.

Processes which are performed by the image processing device according to the embodiment will be described below with reference to FIGS. 4 to 9. FIG. 4 is a diagram illustrating an example of a software configuration of the image processing device according to the embodiment. As illustrated in FIG. 4, the image processing device 10 includes an image acquiring unit 101, a boundary identifying unit 102, a position identifying unit 103, and a trajectory determining unit 104.

The image acquiring unit 101 acquires an image in which a subject including an element to be cut off is pictured. For example, the image acquiring unit 101 acquires an image in which a subject including at least two elements are pictured. The image is, for example, a color image which is captured by the imaging device 154 and in which the chicken thigh M is pictured. When the subject is a chicken thigh M, the elements are, for example, a tendon, a first skin, a second skin, and a third skin.

A tendon is an object of a white string shape which is attached to a part close to a chicken foot tip when a cut is formed from the chicken foot tip to a thigh along a bone and meat is opened.

The first skin is a skin located firstly when an outer perimeter of the chicken thigh M in a view from the side attached to the bone is traced clockwise from the tendon in the case that the chicken thigh M is meat of a chicken left leg. Alternatively, the first skin is a skin located thirdly when an outer perimeter of the chicken thigh M in a view from the side attached to the bone is traced clockwise from the tendon in the case that the chicken thigh M is meat of a chicken right leg. That is, a relative position of the first skin with respect to the tendon is uniquely determined in both cases in which the chicken thigh M is meat of the chicken left leg and in which the chicken thigh M is meat of the chicken right leg. In addition, the first skin is a skin of a chicken buttock.

The second skin is a skin located secondly when an outer perimeter of the chicken thigh M in a view from the side attached to the bone is traced clockwise from the tendon in the case that the chicken thigh M is meat of a chicken left leg. Alternatively, the second skin is a skin located secondly when an outer perimeter of the chicken thigh M in a view from the side attached to the bone is traced clockwise from the tendon in the case that the chicken thigh M is meat of a chicken right leg. That is, a relative position of the second skin with respect to the tendon is uniquely determined in both cases in which the chicken thigh M is meat of the chicken left leg and in which the chicken thigh M is meat of the chicken right leg. In addition, the second skin is a skin of a chicken back.

The third skin is a skin located thirdly when an outer perimeter of the chicken thigh M in a view from the side attached to the bone is traced clockwise from the tendon in the case that the chicken thigh M is meat of a chicken left leg. Alternatively, the third skin is a skin located firstly when an outer perimeter of the chicken thigh M in a view from the side attached to the bone is traced clockwise from the tendon in the case that the chicken thigh M is meat of a chicken right leg. That is, a relative position of the third skin with respect to the tendon is uniquely determined in both cases in which the chicken thigh M is meat of the chicken left leg and in which the chicken thigh M is meat of the chicken right leg. In addition, the third skin is a skin of a chicken buttock or back.

The boundary identifying unit 102 calculates a difference between a pixel value of each pixel of an image obtained by extracting only red components from a color image acquired by the image acquiring unit 101 and a pixel value of each pixel in an image obtained by extracting only green components from the color image, and generates a differential image in which the pixel value of each pixel is the difference calculated above. Then, the boundary identifying unit 102 separates an area in which the tendon, the first skin, the second skin, or the third skin is pictured and an area in which lean meat other than them is pictured by performing a binarization process on the image and identifies boundaries therebetween.

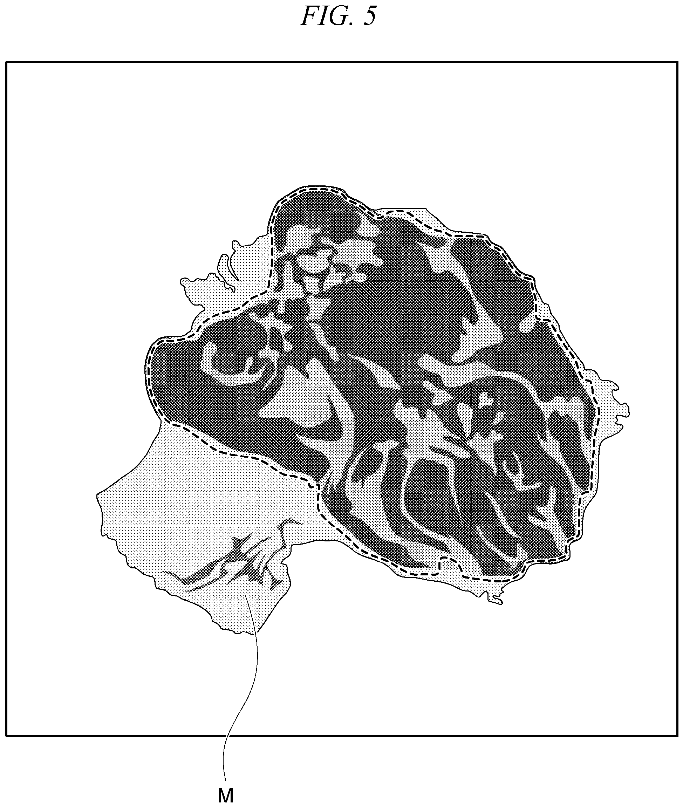

FIG. 5 is a diagram illustrating an example of a boundary between the first skin, the second skin, the third skin, or the tendon and lean meat which is identified by the image processing device according to the embodiment. The chicken thigh M illustrated in FIG. 5 is meat of a chicken left leg. The boundary identifying unit 102 identifies the boundary indicated by a dashed line in FIG. 5, for example, by generating a differential image illustrated in FIG. 5 and performing a binarization process on the differential image. A region inside of the dashed line in FIG. 5 is a region in which lean meat of the chicken thigh M is pictured. On the other hand, a region outside of the dashed line in FIG. 5 is a region in which the tendon, the first skin, the second skin, or the third skin of the chicken thigh M is pictured.

The position identifying unit 103 identifies a position of an element to be cut off on the basis of the image acquired by the image acquiring unit 101. The position identifying unit 103 identifies a region with the largest area among the regions outside of the boundary, which is identified by the boundary identifying unit 102 and indicated by the dashed line in FIG. 5, as a region in which the first skin is pictured.

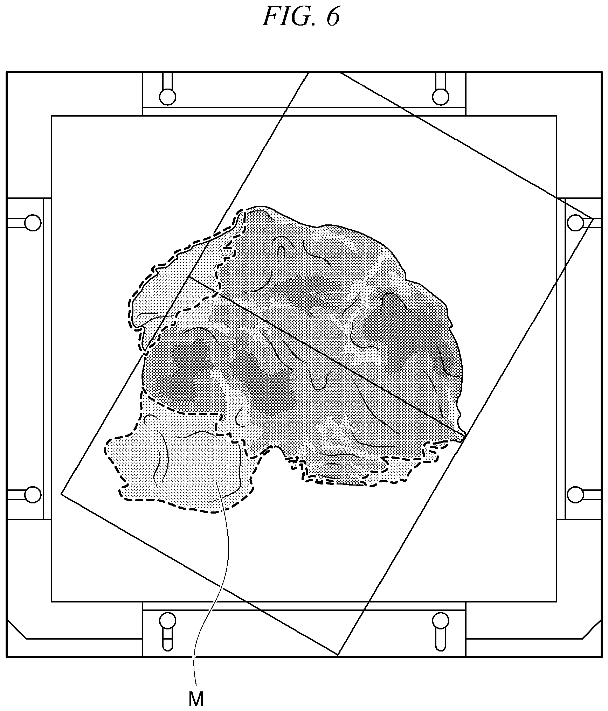

FIG. 6 is a diagram illustrating an example of a first skin of a chicken thigh identified by the image processing device according to the embodiment. The chicken thigh M illustrated in FIG. 6 is meat of a chicken left leg. A region inside of the dashed line in FIG. 6 is a region in which a tendon, a first skin, a second skin, or a third skin of the chicken thigh M is pictured. The position identifying unit 103 identifies, for example, a region with the largest area in the region inside of the dotted line in FIG. 6 as a region in which the first skin is pictured.

In two rectangles illustrated in FIG. 6, lengths of the long sides thereof are the same as a width of the region in which lean meat of the chicken thigh M is pictured in a direction parallel to the long sides. These two rectangles share one long side as illustrated in FIG. 6. For example, the position identifying unit 103 compares the sizes of regions in which any of the three skins are pictured in the two rectangles illustrated in FIG. 6. Then, the position identifying unit 103 determines that the first skin is pictured inside of the rectangle having the larger area in the region in which any of the three skins are pictured.

Then, the position identifying unit 103 superimposes a predetermined figure on the image and identifies a position of an element in the subject using the predetermined figure. The position identifying unit 103 identifies positions of the tendon, the first skin, the second skin, and the third skin in the chicken thigh M using relative positional relationships of these four elements. For example, the position identifying unit 103 superimposes a plurality of rectangles on a color image acquired by the image acquiring unit 101 and identifies a position of the tendon, a position of the first skin, a position of the second skin, and a position of the third skin in the chicken thigh M using the plurality of rectangles.

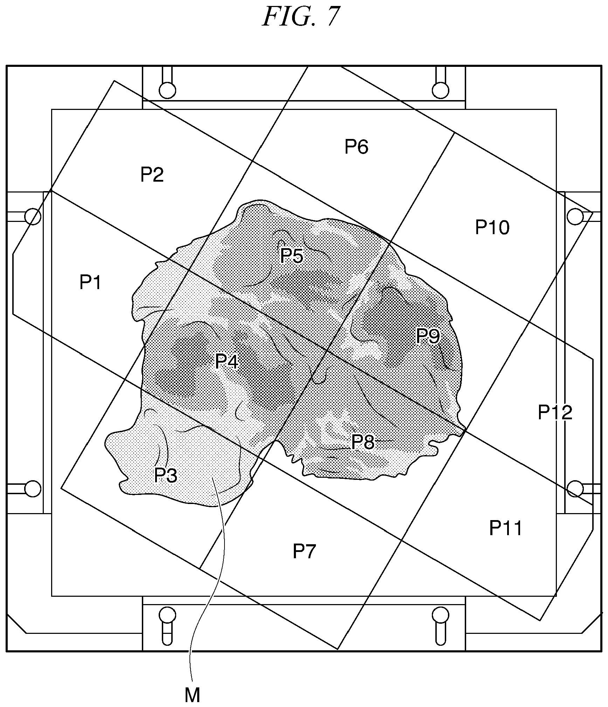

FIG. 7 is a diagram illustrating an example of 12 rectangles superimposed on an image in which a chicken thigh is pictured according to the embodiment. The chicken thigh M illustrated in FIG. 7 is meat of a chicken left leg. FIG. 7 illustrates a rectangle P1, a rectangle P2, a rectangle P3, a rectangle P4, a rectangle P5, a rectangle P6, a rectangle P7, a rectangle P8, a rectangle P9, a rectangle P10, a rectangle P11, and a rectangle P12. The long sides of these 12 rectangles are inclined by 40 degrees with respect to upper and lower sides of the image illustrated in FIG. 7 and upper and lower sides of a plate-shaped member on which the chicken thigh M is placed. A rectangle made up of the rectangle P4, the rectangle P5, the rectangle P8, and the rectangle P9 is circumscribed to the region picturing lean meat of the chicken thigh M, which is identified using the differential image illustrated in FIG. 5.

When the chicken thigh M is meat of a chicken left leg as illustrated in FIG. 7 and it is determined that the first skin is pictured inside of the lower rectangle of the two rectangles illustrated in FIG. 6, the position identifying unit 103 identifies a part on which the rectangle P3 is superimposed in the chicken thigh M is a region in which the first skin is pictured. Next, when the chicken thigh M is meat of a chicken left leg as illustrated in FIG. 7 and it is determined that the first skin is pictured inside of the lower rectangle of the two rectangles illustrated in FIG. 6, the position identifying unit 103 identifies a part on which the rectangle P1 or the rectangle P2 is superimposed in the chicken thigh M is a region in which the second skin is pictured. Next, when the chicken thigh M is meat of a chicken left leg as illustrated in FIG. 7 and it is determined that the first skin is pictured inside of the lower rectangle of the two rectangles illustrated in FIG. 6, the position identifying unit 103 identifies a part on which the rectangle P9 is superimposed in the chicken thigh M is a region in which the third skin is pictured. Next, when the chicken thigh M is meat of a chicken left leg as illustrated in FIG. 7 and it is determined that the first skin is pictured inside of the lower rectangle of the two rectangles illustrated in FIG. 6, the position identifying unit 103 identifies a part on which the rectangle P8 is superimposed in the chicken thigh M is a region in which the tendon is pictured.

When the chicken thigh M is meat of a chicken left leg and it is determined that the first skin is pictured inside of the upper rectangle of the two rectangles illustrated in FIG. 6, the position identifying unit 103 identifies a part on which the rectangle P10 is superimposed in the chicken thigh M is a region in which the first skin is pictured. Next, when the chicken thigh M is meat of a chicken left leg and it is determined that the first skin is pictured inside of the upper rectangle of the two rectangles illustrated in FIG. 6, the position identifying unit 103 identifies a part on which the rectangle P11 or the rectangle P12 is superimposed in the chicken thigh M is a region in which the second skin is pictured. Next, when the chicken thigh M is meat of a chicken left leg and it is determined that the first skin is pictured inside of the upper rectangle of the two rectangles illustrated in FIG. 6, the position identifying unit 103 identifies a part on which the rectangle P4 is superimposed in the chicken thigh M is a region in which the third skin is pictured. Next, when the chicken thigh M is meat of a chicken right leg, the position identifying unit 103 identifies a part on which the rectangle P5 is superimposed in the chicken thigh M is a region in which the tendon is pictured.

When the chicken thigh M is meat of a chicken right leg and it is determined that the first skin is pictured inside of the lower rectangle of the two rectangles illustrated in FIG. 6, the position identifying unit 103 identifies a part on which the rectangle P7 is superimposed in the chicken thigh M is a region in which the first skin is pictured. Next, when the chicken thigh M is meat of a chicken right leg and it is determined that the first skin is pictured inside of the lower rectangle of the two rectangles illustrated in FIG. 6, the position identifying unit 103 identifies a part on which the rectangle P11 or the rectangle P12 is superimposed in the chicken thigh M is a region in which the second skin is pictured. Next, when the chicken thigh M is meat of a chicken right leg and it is determined that the first skin is pictured inside of the lower rectangle of the two rectangles illustrated in FIG. 6, the position identifying unit 103 identifies a part on which the rectangle P5 is superimposed in the chicken thigh M is a region in which the third skin is pictured. Next, when the chicken thigh M is meat of a chicken right leg and it is determined that the first skin is pictured inside of the lower rectangle of the two rectangles illustrated in FIG. 6, the position identifying unit 103 identifies a part on which the rectangle P4 is superimposed in the chicken thigh M is a region in which the tendon is pictured.

When the chicken thigh M is meat of a chicken right leg and it is determined that the first skin is pictured inside of the upper rectangle of the two rectangles illustrated in FIG. 6, the position identifying unit 103 identifies a part on which the rectangle P6 is superimposed in the chicken thigh M is a region in which the first skin is pictured. Next, when the chicken thigh M is meat of a chicken right leg and it is determined that the first skin is pictured inside of the upper rectangle of the two rectangles illustrated in FIG. 6, the position identifying unit 103 identifies a part on which the rectangle P1 or the rectangle P2 is superimposed in the chicken thigh M is a region in which the second skin is pictured. Next, when the chicken thigh M is meat of a chicken right leg and it is determined that the first skin is pictured inside of the upper rectangle of the two rectangles illustrated in FIG. 6, the position identifying unit 103 identifies a part on which the rectangle P8 is superimposed in the chicken thigh M is a region in which the third skin is pictured. Next, when the chicken thigh M is meat of a chicken right leg and it is determined that the first skin is pictured inside of the upper rectangle of the two rectangles illustrated in FIG. 6, the position identifying unit 103 identifies a part on which the rectangle P9 is superimposed in the chicken thigh M is a region in which the tendon is pictured.

The boundary identifying unit 102 identifies a boundary between the elements and a part other than the elements in the image by performing image processing on the image. For example, the boundary identifying unit 102 determines a closed curve line circumscribed to the region in which lean meat of the chicken thigh M is pictured in the color image acquired by the image acquiring unit 101 and identifies parts of the closed curve, which pass through regions in which the tendon, the first skin, the second skin, or the third skin is pictured in the color image, as a boundary between the tendon, the first skin, the second skin, or the third skin and the lean meat of the chicken thigh M.

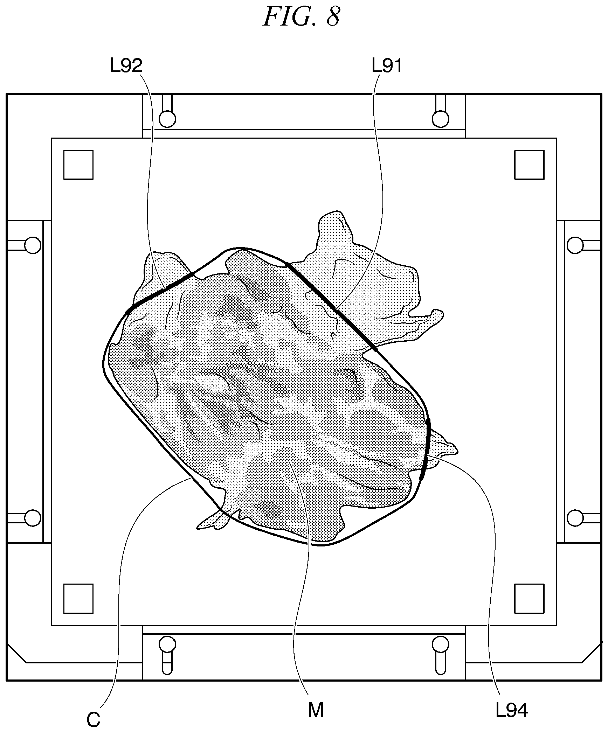

FIG. 8 is a diagram illustrating an example of a boundary between the first skin and lean meat, a boundary between the second skin and lean meat, and a boundary between the tendon and lean meat which are identified by the image processing device according to the embodiment. The chicken thigh M illustrated in FIG. 8 is meat of a chicken right leg. The boundary identifying unit 102 determines a closed curve line C circumscribed to a region in which lean meat of the chicken thigh M is pictured as illustrated in FIG. 8. Then, the boundary identifying unit 102 identifies a segment L91 of the closed curve line C as the boundary between the first skin and lean meat of the chicken thigh M.

In addition, the boundary identifying unit 102 identifies a segment L92 of the closed curve line C as the boundary between the second skin and lean meat of the chicken thigh M. In addition, the boundary identifying unit 102 identifies a segment L94 of the closed curve line C as the boundary between the tendon and lean meat of the chicken thigh M.

The trajectory determining unit 104 determines a trajectory of a cutting edge when the elements are cut off from the subject on the basis of the boundaries. The trajectory determining unit 104 determines, for example, a segment overlapping the boundaries identified by the boundary identifying unit 102 as the trajectory of the cutting edge.

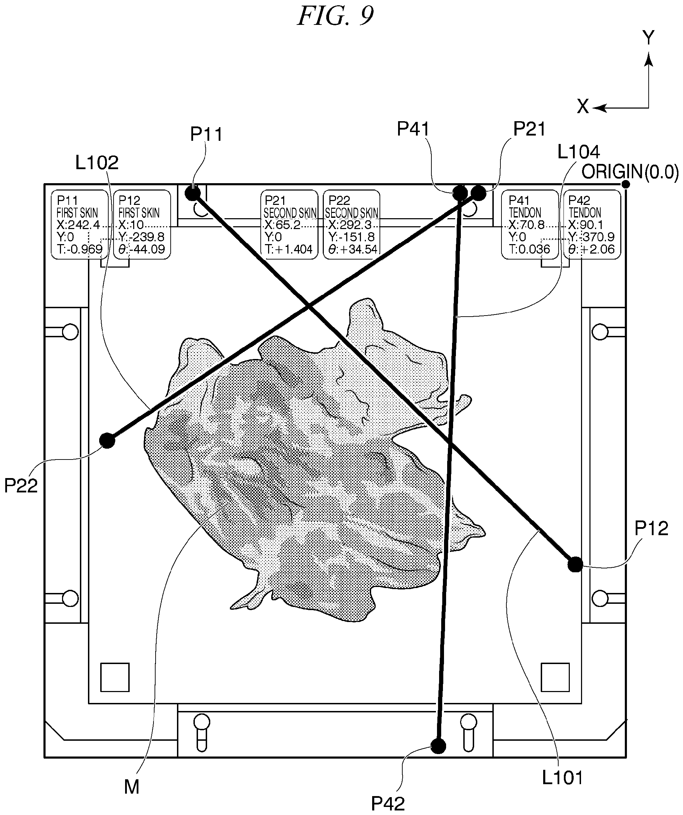

FIG. 9 is a diagram illustrating an example of a trajectory of a cutting edge when the first skin is cut off from the chicken thigh, a trajectory of a cutting edge when the second skin is cut off from the chicken thigh, and a trajectory of a cutting edge when the tendon is cut off from the chicken thigh which are determined by the image processing device according to the embodiment. FIG. 9 illustrates a segment L101 connecting a point P11 and a point P12, a segment L102 connecting a point P21 and a point P22, and a segment L104 connecting a point P41 and a point P42. The lateral direction of the image illustrated in FIG. 9 is defined as an X direction, and the vertical direction of the image illustrated in FIG. 9 is defined as a Y direction.

The point P11 represents a start point of the cutting edge when the first skin is cut off from the chicken thigh M. The X coordinate of the point P11 is "242.4" as illustrated in the upper part of the image illustrated in FIG. 9. The Y coordinate of the point P11 is "0" as illustrated in the upper part of the image illustrated in FIG. 9. The point P12 represents an end point of the cutting edge when the first skin is cut off from the chicken thigh M. The X coordinate of the point P12 is "10" as illustrated in the upper part of the image illustrated in FIG. 9. The Y coordinate of the point P12 is "-239.8" as illustrated in the upper part of the image illustrated in FIG. 9. The segment L101 indicates a trajectory of the cutting edge when the first skin is cut off from the chicken thigh M. "T: -0.969" shown below the coordinates of the point P11 in the upper part of the image illustrated in FIG. 9 indicates a speed of the cutting edge when the first skin is cut off from the chicken thigh M. "*θ*: -44.09" shown below the coordinates of the point P12 in the upper part of the image illustrated in FIG. 9 indicates an inclination of the segment L101.

The point P21 represents a start point of the cutting edge when the second skin is cut off from the chicken thigh M. The X coordinate of the point P21 is "65.2" as illustrated in the upper part of the image illustrated in FIG. 9. The Y coordinate of the point P21 is "0" as illustrated in the upper part of the image illustrated in FIG. 9. The point P22 represents an end point of the cutting edge when the second skin is cut off from the chicken thigh M. The X coordinate of the point P22 is "292.3" as illustrated in the upper part of the image illustrated in FIG. 9. The Y coordinate of the point P22 is "-151.8" as illustrated in the upper part of the image illustrated in FIG. 9. The segment L102 indicates a trajectory of the cutting edge when the second skin is cut off from the chicken thigh M. "T: 1.404" shown below the coordinates of the point P21 in the upper part of the image illustrated in FIG. 9 indicates a speed of the cutting edge when the second skin is cut off from the chicken thigh M. "*θ*: 34.54" shown below the coordinates of the point P22 in the upper part of the image illustrated in FIG. 9 indicates an inclination of the segment L102.

The point P41 represents a start point of the cutting edge when the tendon is cut off from the chicken thigh M. The X coordinate of the point P41 is "70.8" as illustrated in the upper part of the image illustrated in FIG. 9. The Y coordinate of the point P41 is "0" as illustrated in the upper part of the image illustrated in FIG. 9. The point P42 represents an end point of the cutting edge when the tendon is cut off from the chicken thigh M. The X coordinate of the point P42 is "90.1" as illustrated in the upper part of the image illustrated in FIG. 9. The Y coordinate of the point P42 is "-370.9" as illustrated in the upper part of the image illustrated in FIG. 9. The segment L104 indicates a trajectory of the cutting edge when the tendon is cut off from the chicken thigh M. "T: 0.036" shown below the coordinates of the point P41 in the upper part of the image illustrated in FIG. 9 indicates a speed of the cutting edge when the tendon is cut off from the chicken thigh M. "*θ*: 2.06" shown below the coordinates of the point P42 in the upper part of the image illustrated in FIG. 9 indicates an inclination of the segment L102.

The trajectory determining unit 104 determines the segment L101 illustrated in FIG. 9 as the trajectory of the cutting edge when the first skin is cut off from the chicken thigh M on the basis of the segment L91 illustrated in FIG. 8. The trajectory determining unit 104 determines the segment L102 illustrated in FIG. 9 as the trajectory of the cutting edge when the second skin is cut off from the chicken thigh M on the basis of the segment L92 illustrated in FIG. 8. The trajectory determining unit 104 determines the segment L104 illustrated in FIG. 9 as the trajectory of the cutting edge when the tendon is cut off from the chicken thigh M on the basis of the segment L94 illustrated in FIG. 8.

The trajectory determining unit 104 may set the trajectory to be separated by a predetermined distance from the above mentioned boundary. For example, the trajectory determining unit 104 may set a line obtained by moving the boundary by a predetermined distance in a direction perpendicular to the above mentioned boundary as the trajectory of the cutting edge. An example of such a trajectory is a segment obtained by moving the segment L101, the segment L102, or the segment L104 illustrated in FIG. 9 by a predetermined distance in parallel. In addition, in this case, parallel movement in a direction in which it is separated away from the lean meat of the chicken thigh M may be defined as positive parallel movement, and parallel movement in a direction in which it approaches lean meat of the chicken thigh M may be defined as negative parallel movement. For example, even when the above mentioned boundary is a polyline, a curve line, or the like, the trajectory determining unit 104 may set a polyline, a curve line, or the like obtained by moving such boundary by a predetermined distance in parallel as the trajectory of the cutting edge.

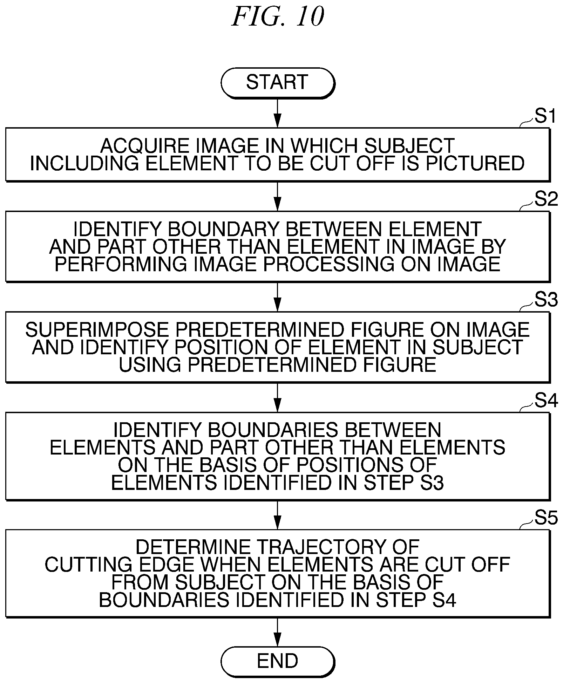

An example of a process flow which is performed by the image processing device according to the embodiment will be described below with reference to FIG. 10. FIG. 10 is a flowchart illustrating an example of the process flow which is performed by the image processing device according to the embodiment.

In Step S1, the image acquiring unit 101 acquires an image in which a subject including an element(s) to be cut off is pictured.

In Step S2, the boundary identifying unit 102 identifies a boundary(ies) between the element(s) to be cut off and a part other than the element(s) in an image by performing image processing on the image.

In Step S3, the position identifying unit 103 superimposes a predetermined figure(s) on the image and identifies a position(s) of the element(s) in the subject using the predetermined figure(s).

In Step S4, the boundary identifying unit 102 identifies a boundary(ies) between the element(s) and a part other than the element(s) on the basis of the position(s) of the element(s) identified in Step S3.

In Step S5, the trajectory determining unit 104 determines a trajectory(ies) of a cutting edge when the element(s) is cut off from the subject on the basis of the boundary(ies) identified in Step S4.

The image processing device, the image processing program, and the image processing method according to the embodiment have been described above. The image processing device 10 includes the image acquiring unit 101, the boundary identifying unit 102, and the trajectory determining unit 104. The image acquiring unit 101 acquires an image in which a subject including an element(s) to be cut off is pictured. The boundary identifying unit 102 identifies a boundary(ies) between the element(s) and a part other than the element(s) in the image by performing image processing on the image. The trajectory determining unit 104 determines a trajectory(ies) of a cutting edge when the element(s) is cut off from the subject on the basis of the boundary(ies). Accordingly, the image processing device 10 can appropriately support work of cutting off an element(s) to be cut off from foodstuffs having unevenness.

The image processing device 10 further includes the position identifying unit 103 that superimposes a predetermined figure(s) on the image and identifies a position(s) of the element(s) in the subject using the predetermined figure(s). Accordingly, the image processing device 10 can identify an element(s) to be cut off and appropriately determine the trajectory(ies) of the cutting edge when the element(s) is cut off from the subject.

The image processing device 10 acquires an image in which a subject including at least two elements are pictured and identifies positions of the elements in the subject using a relative positional relationship between the at least two elements. Accordingly, even when a plurality of elements to be cut off are included in a subject, the image processing device 10 can appropriately identify the positions of the elements and appropriately determine the trajectories of the cutting edge when the elements are cut off from the subject.

In the aforementioned embodiment, the image processing device 10 illustrated in FIG. 1 is realized by the processor 11 that reads and executes an image processing program, but the present invention is not limited thereto. At least part of the image processing device 10 illustrated in FIG. 1 may be realized by hardware including a circuit unit (circuitry) such as a large scale integration (LSI) unit, an application-specific integrated circuit (ASIC), a field-programmable gate array (FPGA), or a graphics processing unit (GPU). Alternatively, at least a part of the image processing device 10 illustrated in FIG. 1 may be cooperatively realized by software and hardware. The hardware may be integrated as a unified body or may be divided into a plurality of bodies.

In the aforementioned embodiment, it is assumed that the subject is a chicken thigh M and elements to be cut off include a tendon, a first skin, a second skin, and a third skin, but the present invention is not limited thereto.

An embodiment of the present invention has been described above in detail with reference to the drawings. A specific configuration of the embodiment of the present invention is not limited to the embodiment, and various combinations or at least one of modification, replacement, and design change may be performed on the embodiment without departing from the scope of the present invention.

The advantageous effects of the present invention described above in the embodiment are exemplary. Therefore, according to the present invention, other advantageous effects which can be recognized by those skilled in the art from description of the embodiment can be achieved in addition the aforementioned advantageous effects.

### [Reference Signs List]

10 Image processing device
11 Processor
12 Main storage device
13 Communication interface
14 Auxiliary storage device
15 Input/output device
16 Bus
101 Image acquiring unit
102 Boundary identifying unit
103 Position identifying unit
104 Trajectory determining unit
151 Mouse
152 Keyboard
153 Display
154 Imaging device
155, 156, 157, 158 Light
20 Food processing line
200 Control device
201 Belt conveyor
202, 203, 204 Photoelectric sensor
M Chicken thigh

## Claims

1. An image processing device comprising:
an image acquiring unit configured to acquire an image in which a subject including an element to be cut off is pictured;
a boundary identifying unit configured to identify a boundary between the element and a part other than the element on the image by performing image processing on the image; and
a trajectory determining unit configured to determine a trajectory of a cutting edge when the element is cut off from the subject on the basis of the boundary.

2. The image processing device according to claim 1, further comprising a position identifying unit configured to superimpose a predetermined figure on the image and to identify a position of the element in the subject using the predetermined figure.

3. The image processing device according to claim 2, wherein the image acquiring unit acquires the image in which the subject including at least two of the elements are pictured, and
wherein the position identifying unit identifies positions of the elements in the subject using a relative positional relationship between the at least two elements.

4. The image processing device according to any one of claims 1 to 3, wherein the trajectory determining unit sets the trajectory to be separated by a predetermined distance from the boundary.

5. An image processing program causing a computer to perform:
an image acquiring function of acquiring an image in which a subject including an element to be cut off is pictured;
a boundary identifying function of identifying a boundary between the element and a part other than the element on the image by performing image processing on the image; and
a trajectory determining function of determining a trajectory of a cutting edge when the element is cut off from the subject on the basis of the boundary.

6. An image processing method comprising:
acquiring an image in which a subject including an element to be cut off is pictured by using an image acquiring unit or an image acquiring function;
identifying a boundary between the element and a part other than the element on the image by performing image processing on the image by using a boundary identifying unit or a boundary identifying function; and
determining a trajectory of a cutting edge when the element is cut off from the subject on the basis of the boundary by using a trajectory determining unit or a trajectory determining function.
